# EUROPÄISCHE PATENTSCHRIFT

(11) **EP 2 067 636 B1**
(45) Veröffentlichungstag und Bekanntmachung des Hinweises auf die Patenterteilung: **06.04.2011**
(21) Anmeldenummer: 08166532.5
(22) Anmeldetag: 14.10.2008
(51) Int. Cl.: B60C 11/00

(54) **Fahrzeugluftreifen**
Pneumatic tyres for a vehicle
Pneus de véhicule

(30) Priorität: 08.12.2007 DE 102007059290
(43) Veröffentlichungstag der Anmeldung: 10.06.2009
(73) Patentinhaber: Continental Reifen Deutschland GmbH, 30165 Hannover (DE)
(72) Erfinder: Heyden, Arne, 30167 Hannover (DE); Kather, Thomas, 30453 Hannover (DE); Kuhn, Martin, 41468 Neuss (DE); Jeronim, Dieter, 30419 Hannover (DE); Siemers, Arne, 30173 Hannover (DE)
(74) Vertreter: Finger, Karsten

(56) Entgegenhaltungen:
- EP-A- 0 305 617
- EP-A- 1 466 759
- JP-A- 9 136 511
- JP-A- 10 119 508
- JP-A- 62 292 507
- JP-A- 2000 071 720
- JP-A- 2000 142 030
- JP-A- 2001 287 510
- JP-A- 2002 029 216

## Beschreibung

Die Erfindung betrifft einen Fahrzeugluftreifen, insbesondere für Lastkraftwagen oder Transporter, mit einem Laufstreifen mit einer Anzahl von in Umfangsrichtung umlaufenden Umfangsnuten und mit mehreren in Umfangsrichtung umlaufenden Profilrippen.

Für Lastkraftwagen oder Transporter vorgesehene Fahrzeugluftreifen weisen üblicherweise Laufstreifen mit in Umfangsrichtung umlaufenden Profilrippen auf. Dabei kann der Laufstreifen ausschließlich mit Profilrippen versehen sein oder es können neben Profilrippen auch Klotzreihen vorgesehen sein. Im Querschnitt betrachtet weisen die Profilrippen eine flache Außenkontur auf- im axialen Querschnitt ist die Verbindung zwischen den Rippenkanten einer Profilrippe eine Gerade bzw. annähernd eine Gerade. Es ist bekannt, dass beim Fahrbetrieb solcher Reifen lokale Druckspitzen an den Rippenkanten auftreten, welche einen unregelmäßigen Abrieb und damit eine verringerte Haltbarkeit und Lebensdauer der Reifen zur Folge haben. Die Ursache für den auftretenden höheren Druck an den Rippenkanten liegt bei der Herstellung des Reifens, wenn das Profil mit Umfangsnuten und Profilrippen bzw. Klotzreihen über die Reifenvulkanisationsform in das noch unvulkanisierte Gummimaterial eingeprägt wird, da unterhab der in Umfangsrichtung umlaufenden Umfangsnuten der Gürtelverband deformiert wird. Der deformierte Gürtelverband nimmt unter Luftdruck und unter Last eine Lage parallel zum Untergrund ein, wodurch die oben erwähnte Druckspitzen an den Rippenkanten auftreten.

Ein Fahrzeugluftreifen der eingangs genannten Art ist aus der JP-A-2001-287510 bekannt. Der Laufstreifen dieses Laufreifens weist Profilrippen auf, deren in Umfangsrichtung verlaufende Rippenkanten abgeschrägt sind. Dadurch wird der Querschnitt der Umfangsnuten zwischen den Profilrippen im radial äußeren Bereich trichterförmig erweitert. Damit soll ein frühzeitiger Abrieb dieser Profilrippen verhindert und das Ansprechen des Reifens auf Lenkkräfte sowie der Rollwiderstand verbessert werden.

Aus der EP-B-0 246 995 ist ein Fahrzeugluftreifen bekannt, welcher mit einem Laufstreifen mit einer Vielzahl von Traktionselementen bzw. Blöcken versehen ist. Die Blöcke weisen eine Bodenberührungsfläche auf, deren Form derart ist, dass die Ortskurve der Punkte, die laterial über die Bodenberührungsfläche verlaufen, an jedem Ort entlang der umfänglichen Länge eine Linie definiert, die kontinuierlich konvex ist und deren Krümmungsmittelpunkt radial innerhalb der konvexen Linie angeordnet ist. Die Amplituden der Linien, die durch die Ortskurve der Punkte auf den Bodenberührungsflächen definiert sind, variieren über die axiale Breite der Lauffläche. Auf diese Weise soll die gesamte Bodenaufstandsfläche des Reifens beim Betreib bzw. Abrollen optimiert werden. Aus der DE-A 3 625 426 ist ein Fahrzeugluftreifen mit zwei durch eine mittige Umfangsnut voneinander getrennten Laufbändern vorgesehen, welche bei unter Betriebsdruck stehendem Reifen je eine ballige Lauffläche aufweisen. Auf diese Weise wird jedem Laufband die bei Einzelreifen übliche Gestalt vermittelt und somit erreicht, dass der Reifen die Wirkung eines Zwillingsreifens aufweist.

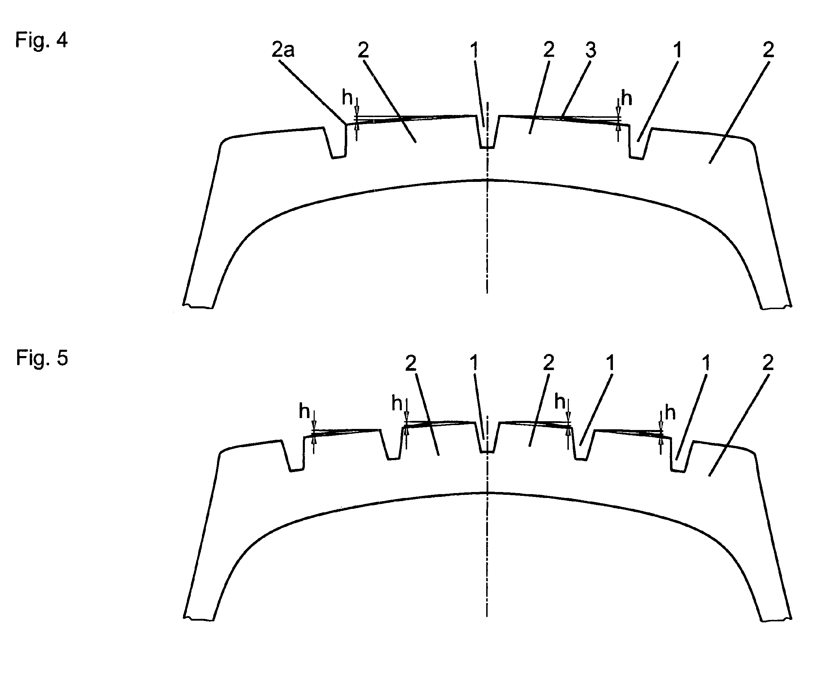

JP-A-2000-142030 offenbart (Fig. 4) einen Reifen, der die Merkmale des Oberbegriffs des Anspruchs 1 aufweist.

Der Erfindung liegt die Aufgabe zu Grunde, bei einem Reifen der eingangs genannten Art Maßnahmen zu treffen, mit welchen die erwähnten lokalen Druckspitzen an den Rippenkanten zur Reduzierung von unregelmäßigem Abrieb vermieden werden.

Gelöst wird die gestellte Aufgabe erfindungsgemäß dadurch, dass zumindest eine der im mittleren Bereich des Laufstreifens verlaufenden Profilrippen über ihren gesamten Umfang eine sich zwischen ihren Rippenkanten erstreckende ballige, konvexe Erhebung aufweist, deren größte Höhe sich im mittleren Drittel des Rippenquerschnitts befindet, wobei die Höhe an der Stelle mit der größten Höhe, bezogen auf eine im axialen Querschnitt gezogene gerade Verbindungslinie zwischen den Rippenkanten, zwischen 1 mm und maximal 1,5 mm beträgt.

Auf diese Weise kommt der zentrale Bereich der Profilrippe beim Betrieb bzw. Abrollen des Reifens früher in Kontakt mit der Straße als die beiden Rippenkanten. Dies führt zu einer Vergleichmäßigung der Druckverteilung über die Rippenbreite und damit zu einem gleichmäßigen Abrieb.

Reifen mit erfindungsgemäß ausgeführten Profilrippen im Laufstreifen zeigen darüber hinaus ein etwas verbessertes Nass- und Trockenbremsverhalten, sowie eine Verbesserung im Aquaplaningverhalten und, was insbesondere bei Reifen für Schwerlastfahrzeuge von Bedeutung ist, eine höhere Gürtelkantenhaltbarkeit.

Zur Erzielung einer möglichst optimalen Eigenschaftsverbesserung des Reifens ist es von Vorteil, den Laufstreifen mit einer Anzahl von Profilrippen mit Erhebungen zu versehen. Bei einem Reifen mit einem Laufstreifen mit zumindest vier Umfangsnuten und zumindest fünf Profilrippen in einer bezüglich des Reifenäquators symmetrischen Anordnung ist gemäß der Erfindung in jeder Laufstreifenhälfte zumindest eine zwischen zwei Umfangsnuten verlaufende Profilrippe mit der balligen Erhebung versehen.

Für eine möglichst gleichmäßige Druckverteilung über die Laufstreifenbreite ist es dabei von Vorteil, wenn auch die entlang des oder die benachbart des Reifenäquators verlaufende(n) Profilrippe(n) und die dieser bzw. diesen benachbart verlaufenden Profilrippen jeweils mit der balligen Erhebung versehen ist bzw. sind.

Bei einem Reifen mit einem Laufstreifen mit fünf oder sechs Profilrippen können sämtliche Profilrippen mit balligen, konvexen Erhebungen versehen sein, wobei die bei/in der Laufstreifenmitte verlaufenden Profilrippe(n) jeweils die ballige Erhebung aufweist bzw. aufweisen, deren größte Höhe, bezogen auf eine im axialen Querschnitt gezogene gerade Verbindungslinie zwischen den Rippenkanten, zwischen 1 mm und maximal 1,5 mm beträgt, wobei die laufstreifenaußenseitig anschließenden Profilrippen ballige, konvexe Erhebungen aufweisen, deren Höhen von der oder den zentralen Profilrippe(n) bis zur schulterseitigen Profilrippe abnehmen. Die größte Höhe der Erhebungen auf den schulterseitigen Profilrippen sollte zwischen 0,3 mm und 0, 5 mm betragen.

Bei einer Ausführung des Laufstreifens mit drei Umfangsnuten und vier Profilrippen in einer bezüglich des Reifenäquators symmetrischen Anordnung ist es besonders vorteilhaft, wenn die beidseitig der zentralen Umfangsnut verlaufenden Profilrippen jeweils mit der balligen, konvexen Erhebung versehen sind.

Weitere Merkmale, Vorteile und Einzelheiten der Erfindung werden nun anhand der Zeichnung, die schematisch mehrere Ausführungsbeispiele darstellt, näher beschrieben. Dabei zeigen

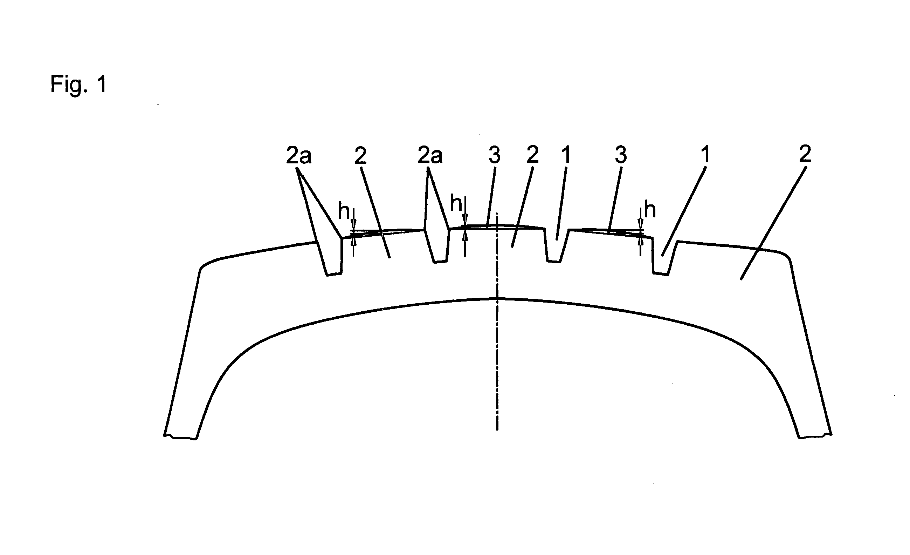

Fig. 1 bis Fig. 7 unterschiedliche Ausführungsformen der Erfindung anhand von Querschnitten durch die Laufstreifenbereiche von Fahrzeugluftreifen.

Fahrzeugluftreifen weisen üblicherweise einen Laufstreifen mit einer Anzahl von breiten und auf Profiltiefe ausgeführten sowie in Umfangsrichtung umlaufenden Umfangsnuten auf. Die Umfangsnuten trennen beispielsweise Profilrippen von Profilrippen oder Profilrippen von Profilklotzreihen, wobei eine Profilrippe ein in Umfangsrichtung umlaufendes zusammenhängendes Band ist, welches jedoch durch Einschnitte, Sacknuten und dergleichen strukturiert sein kann. Die dargestellten Ausführungsbeispiele sind Laufstreifen mit Profilrippen.

Die in den Fig. 1 bis 3 gezeigten Laufstreifen weisen vier in Umfangsrichtung umlaufende Umfangsnuten 1 und fünf Profilrippen 2 auf, von welchen eine entlang des Reifenäquators, zwei schulterseitig und jeweils eine mittig zwischen diesen verläuft. Bei der Ausführungsform gemäß Fig. 1 sind die entlang des Reifenäquators verlaufende Profilrippe 2 und die beiden dieser benachbart verlaufenden Profilrippen 2 jeweils mit einer balligen, konvexen Erhebung 3 versehen. Die balligen Erhebungen 3 bedecken die Profilrippen 2 über ihre gesamte Umfangserstreckung derart, dass im axialen Querschnitt gemäß Fig. 1 die radiale Höhe der jeweiligen Profilrippe 2 zwischen den beiden Rippenkanten 2a in Richtung Rippenmitte kontinuierlich größer wird und ihr Maximum im mittleren Drittel des Rippenquerschnitts erreicht. Die größte Höhe h der balligen Erhebung 3 entspricht deren maximalen radialen Abstand zu einer die Rippenkanten 2a verbindenden Geraden und beträgt sowohl für die zentrale Profilrippe 2 als auch die beiden dieser benachbarten Profilrippen 2 zwischen 1 mm und 1,5 mm.

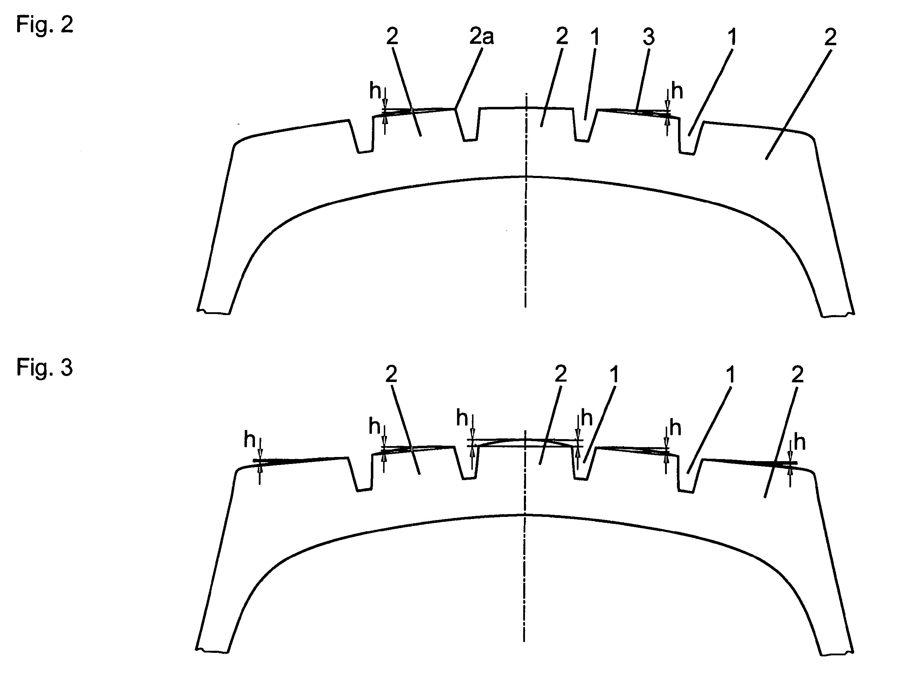

Bei der in Fig. 2 gezeigten Ausführungsvariante sind lediglich die beiden zwischen den Umfangsnuten 1 in jeder Laufstreifenhälfte verlaufenden Profilrippen 2 mit einer balligen Erhebung 3 versehen. Die größte Höhe h dieser balligen Erhebung 3 beträgt ebenfalls zwischen 1 mm und 1,5 mm.

Fig. 3 zeigt eine Ausführungsvariante, bei der sämtliche Profilrippen 2 mit balligen Erhebungen 3 versehen sind. Die ballige Erhebung 3 auf der entlang des Reifenäquators verlaufenden Profilrippe 2 weist eine größte Höhe h von 1 mm bis 1,5 mm, die balligen Erhebungen 3 auf den an die zentrale Profilrippe 2 anschließenden Profilrippen 2 weisen jeweils eine größte Höhe h von 0,7 mm bis 1mm auf. Die schulterseitig gelegenen Profilrippen 2 besitzen ballige Erhebungen 3 mit einer maximalen Höhe h von 0,3 mm bis 0,5 mm. Bei dieser Ausführungsvariante nimmt daher die Höhe h der balligen Erhebungen 3 von der Laufstreifenmitte in Richtung zu den Laufstreifenrändern ab.

Fig. 4 zeigt eine Ausführungsvariante eines Laufstreifens mit drei breiten Umfangsnuten 1, von welchen eine entlang des Reifenäquators verläuft. An die zentrale Umfangsnut 1 schließen beidseitig Profilrippen 2 an, die mit einer balligen Erhebung 3 versehen sind, deren größte Höhe h zwischen 1 mm und 1,5 mm beträgt. Die schulterseitig verlaufenden Profilrippen 2 weisen keine balligen Erhebungen auf.

Die Figuren 5 bis 7 zeigen jeweils einen Laufstreifen mit fünf in Umfangsrichtung umlaufenden Umfangsnuten 1, wobei eine dieser Umfangsnuten 1 entlang des Reifenäquators verläuft. Der Laufstreifen weist symmetrisch zum Reifenäquator angeordnete Profilrippen 2 auf, sodass in jeder Laufstreifenhälfte drei Profilrippen 2 vorgesehen sind. Bei der in Fig. 5 gezeigten Ausführungsform sind die beiden an die zentrale Umfangsnut 1 anschließenden Profilrippen 2 jeweils mit einer balligen Erhebung 3 versehen, deren größte Höhe h zwischen 1 mm und 1,5 mm beträgt. Die von diesen Profilrippen 2 durch breite Umfangsnuten 1 getrennten Profilrippen 2 weisen ebenfalls ballige Erhebungen 3 mit einer größte Höhe h zwischen 1 mm und 1,5 mm auf. Die schulterseitig verlaufenden Profilrippen 2 sind frei von balligen Erhebungen.

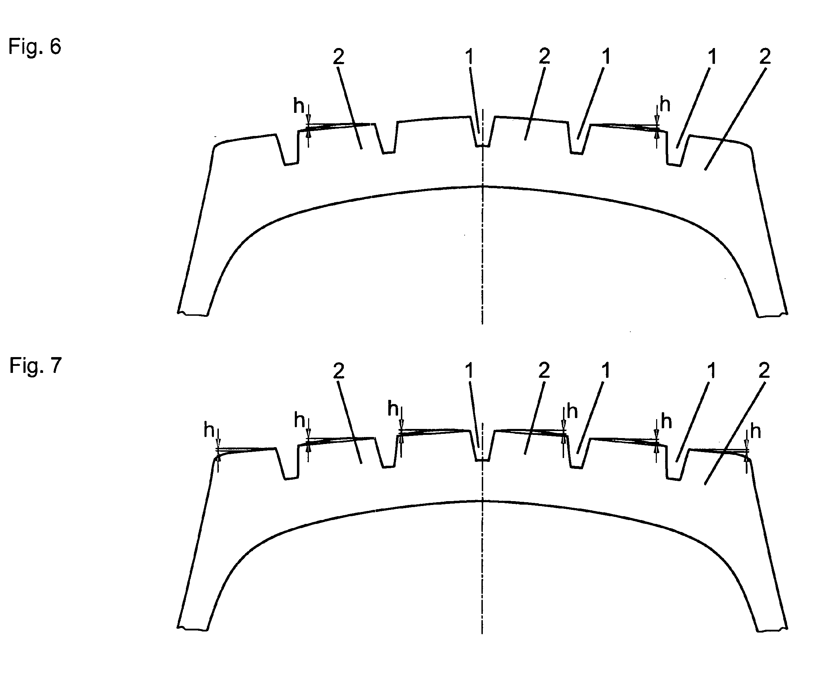

Bei der in Fig. 6 gezeigten Ausführungsform ist lediglich die in jeder Laufstreifenhälfte zwischen der schulterseitigen Profilrippe 2 und der mittigen Profilrippe 2 verlaufende Profilrippe 2 mit einer balligen Erhebung 3 mit einer größte Höhe h zwischen 1 mm und 1,5 mm versehen.

Fig. 7 zeigt eine Ausführungsform, bei der sämtliche Profilrippen 2 mit balligen Erhebungen 3 versehen sind, wobei die in jeder Laufstreifenhälfte jeweils bei der Laufstreifenmitte verlaufenden Profilrippen 2 ballige Erhebungen 3 aufweisen, deren maximale Höhe h zwischen 1 mm und 1,5 mm beträgt, die an diese zur Laufstreifenaußenseite anschließenden Profilrippen 2 weisen jeweils eine ballige Erhebung 3 auf, die niedriger ausgeführt ist und eine größte Höhe h von 0, 7 mm bis 1 mm aufweist. Die schulterseitig gelegenen Profilrippen 2 besitzen ballige Erhebungen 3 mit einer größten Höhe h von 0,3 mm bis 0,5 mm.

Bei erfindungsgemäß ausgeführte Laufstreifen aufweisenden Reifen wird das Auftreten von lokalen Druckspitzen an den Rippenkanten vermieden, wodurch ein gleichmäßiger Abrieb des Laufstreifens gewährleistet wird. Die Erfindung ist bei Fahrzeugluftreifen für Schwerlastfahrzeuge oder Transporter besonders vorteilhaft einsetzbar, da gerade bei diesen Reifentypen Druckspitzen an Rippenkanten problematisch sind. Die Erfindung ist jedoch bei allen Fahrzeugluftreifen anwendbar.

### Bezugszeichenliste

- 1: mfangsnut
- 2: Profilrippe
- 2a: Rippenkante
- 3: Erhebung
- h: Höhe der Erhebung

## Patentansprüche

1. Fahrzeugluftreifen, insbesondere für Lastkraftwagen oder Transporter, mit einem Laufstreifen mit einer Anzahl von in Umfangsrichtung umlaufenden Umfangsnuten (1) und mit mehreren in Umfangsrichtung umlaufenden Profilrippen (2), wobei
zumindest eine der im mittleren Bereich des Laufstreifens verlaufenden Profilrippen (2) über ihren gesamten Umfang eine sich zwischen ihren Rippenkanten (2a) erstreckende ballige, konvexe Erhebung (3) aufweist, deren größte Höhe (h) sich im mittleren Drittel des Rippenquerschnitts befindet, **dadurch gekennzeichnet, dass** die Höhe (h) an der Stelle mit der größten Höhe, bezogen auf eine im axialen Querschnitt gezogene gerade Verbindungslinie zwischen den Rippenkanten (2a), zwischen 1 mm und maximal 1,5 mm beträgt.

2. Fahrzeugluftreifen nach Anspruch 1 mit einem Laufstreifen mit zumindest vier Umfangsnuten (1) und zumindest fünf Profilrippen (2) in einer bezüglich des Reifenäquators symmetrischen Anordnung, **dadurch gekennzeichnet, dass** in jeder Laufstreifenhälfte zumindest eine zwischen zwei Umfangsnuten (1) verlaufende Profilrippe (2) mit der balligen, konvexen Erhebung (3) versehen ist.

3. Fahrzeugluftreifen nach Anspruch 2, **dadurch gekennzeichnet, dass** die entlang des oder die benachbart des Reifenäquators verlaufende(n) Profilrippe(n) (2) und die dieser bzw. diesen benachbart verlaufenden Profilrippen (2) jeweils mit der balligen Erhebung (3) versehen ist bzw. sind.

4. Fahrzeugluftreifen nach Anspruch 2, **dadurch gekennzeichnet, dass** sämtliche Profilrippen (2) mit balligen, konvexen Erhebungen (3) versehen sind, wobei die bei/in der Laufstreifenmitte verlaufenden Profilrippe(n) (2) jeweils die ballige Erhebung (3) aufweist bzw. aufweisen, deren größte Höhe, bezogen auf eine im axialen Querschnitt gezogene gerade Verbindungslinie zwischen den Rippenkanten (2a), zwischen 1 mm und maximal 1,5 mm beträgt, wobei die laufstreifenaußenseitig anschließenden Profilrippen (2) ballige, konvexe Erhebungen (3) aufweisen, deren Höhen (h) von der oder den zentralen Profilrippe(n) (2) bis zur schulterseitigen Profilrippe (2) abnehmen.

5. Fahrzeugluftreifen nach Anspruch 4, **dadurch gekennzeichnet, dass** die Erhebungen (3) auf den schulterseitigen Profilrippen (2) an ihrer Stelle mit der größten Höhe eine Höhe zwischen 0,3 mm und 0,5 mm aufweisen.

6. Fahrzeugluftreifen nach Anspruch 1 mit einem Laufstreifen mit drei Umfangsnuten (1) und vier Profilrippen (2) in einer bezüglich des Reifenäquators symmetrischen Anordnung, **dadurch gekennzeichnet, dass** die beidseitig der zentralen Umfangsnut (1) verlaufenden Profilrippen (2) jeweils mit der balligen, konvexen Erhebung (3) versehen sind.

## Claims

1. Pneumatic vehicle tyre, in particular for trucks or transporters, with a tread rubber with a number of circumferential grooves (1) running around in the circumferential direction and with a number of profile ribs (2) running around in the circumferential direction, at least one of the profile ribs (2) running in the central region of the tread rubber having over its entire circumference a crowned, convex elevation (3), which extends between its rib edges (2a) and the greatest height (h) of which is in the middle third of the rib cross section, **characterized in that** the height (h) at the point with the greatest height, with reference to a joining line between the rib edges (2a), taken as a straight line in the axial cross section, is between 1 mm and at most 1.5 mm.

2. Pneumatic vehicle tyre according to Claim 1, with a tread rubber with at least four circumferential grooves (1) and at least five profile ribs (2) in an arrangement that is symmetrical with respect to the equator of the tyre, **characterized in that** in each half of the tread rubber there is provided at least one profile rib (2) running between two circumferential grooves (1) and having the crowned, convex elevation (3).

3. Pneumatic vehicle tyre according to Claim 2, **characterized in that** the profile rib(s) (2) running along or adjacent to the equator of the tyre and the profile ribs (2) running adjacent to said first profile rib(s) is or are respectively provided with the crowned elevation (3).

4. Pneumatic vehicle tyre according to Claim 2, **characterized in that** all of the profile ribs (2) are provided with crowned, convex elevations (3), the profile rib(s) (2) running at/in the centre of the tread rubber respectively having the crowned elevation (3) of which the greatest height, with reference to a joining line between the rib edges (2a), taken as a straight line in the axial cross section, is between 1 mm and at most 1.5 mm, the profile ribs (2) adjoining on the outer side of the tread rubber having crowned, convex elevations (3) of which the heights (h) decrease from the central profile rib(s) (2) to the profile rib (2) at the shoulder.

5. Pneumatic vehicle tyre according to Claim 4, **characterized in that** the elevations (3) on the profile ribs (2) at the shoulders have at their point with the greatest height a height of between 0.3 mm and 0.5 mm.

6. Pneumatic vehicle tyre according to Claim 1, with a tread rubber with three circumferential grooves (1) and four profile ribs (2) in an arrangement that is symmetrical with respect to the equator of the tyre, **characterized in that** the profile ribs (2) running on both sides of the central circumferential groove (1) are respectively provided with the crowned, convex elevation (3).

## Revendications

1. Bandage pneumatique pour roue de véhicule, en particulier pour camions ou transporteurs, le bandage présentant une bande de roulement dotée de plusieurs rainures périphériques (1) qui l'entourent dans la direction périphérique et de plusieurs nervures profilées (2) qui l'entourent dans la direction périphérique,
au moins l'une des nervures profilées (2) qui s'étendent dans la partie centrale de la bande de roulement présentant sur toute sa périphérie un rehaussement convexe bombé (3) qui s'étend entre ses bords (2a) de nervure et dont la plus grande hauteur (h) est située dans le tiers central de la section transversale de la nervure,
**caractérisé en ce que**
la hauteur (h) est comprise entre 1 mm et au plus 1,5 mm à l'emplacement de plus grande hauteur par rapport à une ligne droite de liaison tracée dans la section transversale axiale entre les bords (2a) de la nervure.

2. Bandage pneumatique pour roue de véhicule selon la revendication 1, doté d'une bande de roulement qui présente au moins quatre rainures périphériques (1) et au moins cinq nervures profilées (2) agencées symétriquement par rapport à l'équateur du bandage de roue, **caractérisé en ce que** dans chaque moitié de la bande de roulement, au moins une nervure profilée (2) qui s'étend entre deux rainures périphériques (1) est dotée du rehaussement convexe bombé (3).

3. Bandage pneumatique pour roue de véhicule selon la revendication 2, **caractérisé en ce que** le long de la ou des nervures profilées (2) qui s'étendent au voisinage de l'équateur du bandage de roue et les nervures profilées (2) à leur voisinage sont toutes dotées du rehaussement bombé (3).

4. Bandage pneumatique pour roue de véhicule selon la revendication 2, **caractérisé en ce que** toutes les nervures profilées (2) sont dotées d'un rehaussement convexe bombé (3), la ou les nervures profilées (2) qui s'étendent au milieu de la bande de roulement présentant toutes le rehaussement bombé (3) dont la plus grande hauteur par rapport à une ligne droite de liaison tracée dans la section transversale axiale entre les bords (2a) de la nervure est comprise entre 1 mm et au moins maximum 1,5 mm, les nervures profilées (2) qui se raccordent aux côtés extérieurs de la bande de roulement présentant un rehaussement convexe (3) dont la hauteur (h) diminue depuis la ou les nervures profilées centrales (2) jusqu'à la nervure profilée (2) située du côté de l'épaulement.

5. Bandage pneumatique pour roue de véhicule selon la revendication 4, **caractérisé en ce que** le rehaussement (3) des nervures profilées (2) situées du côté de l'épaulement présente à son emplacement de plus grande hauteur une hauteur comprise entre 0,3 mm et 0,5 mm.

6. Bandage pneumatique pour roue de véhicule selon la revendication 1, présentant une bande de roulement dotée de trois rainures périphériques (1) et de quatre nervures profilées (2) agencées symétriquement par rapport à l'équateur du bandage de roue, **caractérisé en ce que** les nervures profilées (2) qui s'étendent des deux côtés de la rainure périphérique centrale (1) sont toutes dotées du rehaussement convexe bombé (3).
